# EUROPÄISCHE PATENTSCHRIFT

(11) **EP 0 744 714 B1**
(45) Veröffentlichungstag und Bekanntmachung des Hinweises auf die Patenterteilung: **02.01.2002**
(21) Anmeldenummer: 96107330.1
(22) Anmeldetag: 09.05.1996
(51) Int. Cl.: G07C 5/12, G01P 1/12

(54) **Registriervorrichtung für Fahrtschreiber**
Recording device for tachograph
Dispositif d'enregistrement pour tachygraphe

(30) Priorität: 26.05.1995 DE 29508775 U
(43) Veröffentlichungstag der Anmeldung: 27.11.1996
(73) Patentinhaber: Mannesmann VDO AG, 60326 Frankfurt (DE)
(72) Erfinder: Hug, Klaus, Dipl.-Ing. (FH), 78727 Oberndorf (DE); Schreck, Ingrid, 78048 Villingen-Schwenningen (DE)

(56) Entgegenhaltungen:
- DE-A- 3 313 770
- DE-A- 3 618 109
- DE-U- 8 804 412

## Beschreibung

Die Erfindung betrifft eine Registriervorrichtung für Fahrtschreiber gemäß dem Oberbegriff des Anspruchs 1.

Eine derartige in der DE-U1 88 04 412 beschriebene Registriervorrichtung bietet für eine Mehrzahl von Registrierschlitten eine absolut geradlinige Führung und ermöglicht ein Minimum an Bauhöhe, was für Fahrtschreiber, die quer zur Aufzeichnungsebene eine möglichst geringe Bauhöhe aufweisen sollen, und bei denen die Diagrammscheiben entweder selbsttätig eingezogen und ausgegeben oder mittels eines parallel zur Aufzeichnungsebene bewegbaren Trägers in Registrierposition gebracht werden, von entscheidender Bedeutung ist. Das heißt, bei dieser Registriervorrichtung wird der Bauraum, aus dem lediglich die Spitzen der Registrierorgane herausragen, durch die Bauhöhe der Registrierschlitten bestimmt. Die steuernde Nockenwelle und die den Registrierschlitten zugeordneten, die Registrierkräfte liefernden Schenkelfedern befinden sich innerhalb dieses Bauraumes. Aus diesem Grunde und auch dadurch, daß die Registrierschlitten unmittelbar mittels der Federn in die Registrierposition geführt und mittels eines zusätzlichen Überhubes die Registrierkraft erzeugt wird, ergeben sich kurze Umschaltwege und ein schnelles Umschalten in die beiden Zustände "angehoben" und "abgesenkt".

DE 33 13 770 A zeigt eine Plotteranordnung, bei der der an einem bezüglich der Zeichenrichtung horizontal angeordneten Führungsgestell montierte Zeichenstift(träger) durch eine dezentrale Nockensteuerung in seiner Funktion entsprechend der Ausbildung des Nockens erfolgt. Die Steuerung der Hebe- bzw. Senkfunktion des am Führungsgestell agierenden Zeichenstiftes wird durch eine parallel zur Bewegungsrichtung des Führungsgestells verlaufende Schiene, welche als Vierkantwelle ausgebildet ist und auf der ein Steuermocken angeordnet ist, bewirkt.

Infolge zunehmender Registrieraufgaben und der angestrebten höheren Aussagefähigkeit des Dokumentes "Diagrammscheibe" ergeben sich insbesondere bei der Führung der Registrierschlitten Schwierigkeiten, weil zusätzliche Registrierschlitten nicht mehr ausreichend kippfrei gelagert werden können bzw. in die Bewegungsbereiche der bereits vorhandenen Registrierschlitten eingreifen und letztlich nicht ohne eine gewisse Breite in Führungsrichtung realisiert werden können. Abgesehen von Zusatzaufzeichnungen zu den im Oberbegriff genannten Grundfunktionen eines Fahrtschreibers beispielsweise für den Kraftstoffverbrauch oder für Funktionen von Sonderfahrzeugen wird als zusätzliche Registrierfunktion neuerdings eine fahrerbezogene alphanumerische Kennzeichnung der in gegebenenfalls verschiedenen Fahrtschreibern einer Fahrzeugflotte verwendeten Diagrammscheiben erforderlich, um die Diagrammscheiben eines Fahrers unverwechselbar diesem zuordnen zu können und letztlich nachweisen zu können, daß sämtliche Diagrammscheiben des betreffenden Fahrers tatsächlich vorhanden sind.

Die Diagrammscheiben sind aber bereits weitgehend mit unverzichtbaren, konzentrischen Registrierfeldern und Skalenaufdrucken belegt, so daß die geforderte, visuell lesbare und zeitgleich den übrigen Aufzeichnungen zuzuordnende fahrerbezogene Kennzeichnung ohne Reduzierung der Hübe der bisherigen Aufzeichnungen nur dadurch auf einer Diagrammscheibe untergebracht werden kann, daß ein dichteres Zusammenlegen der bisherigen Aufzeichnungen in radialer Richtung, mit anderen Worten ein Verringern der bisher zwischen den Aufzeichnungen vorgesehenen im allgemeinen geringen Freiflächen erfolgt.

Eine derartige intensive Nutzung der Aufzeichnungsfläche läßt sich in einem ohnehin räumlich hochverdichteten Gerät, wie es der Fahrtschreiber darstellt, mit dem herkömmlichen Konzept, bei dem jeder Registrierspur ein Registrierorgan zugeordnet ist, nicht mehr verwirklichen. Andererseits bietet sich in solchen Fällen eine Registriervorrichtung an, welche lediglich einen mit einem Registrierorgan bestückten Registrierschlitten aufweist, der quer zur Transportrichtung der Diagrammscheibe kontinuierlich über mehreren Registrierspuren hin- und herbewegt und jeweils dann verschwenkt bzw. das Registrierorgan kurzzeitig auf die Diagrammscheibe abgesenkt und wieder angehoben wird, wenn in der betreffenden Registrierspur die Aufzeichnung eines Diagramm- oder Kennzeichenelementes erfolgen soll.

Mit einer solchen in zwei Dimensionen gesteuerten Registriervorrichtung läßt sich zwar das bestehende Raumproblem lösen und die gegebene Aufzeichnungsfläche maximal nutzen, sie ist jedoch nicht für alle Registrierfunktionen eines Fahrtschreibers geeignet, insbesondere nicht für die Geschwindigkeitsaufzeichnungen. Gerade diese Registrierfunktion bedingt es in Fahrtschreibern das "Wachspapier-Registrierverfahren" anzuwenden, weil dieses relativ feine Linien aufzuzeichnen gestattet, die bei dem geringen zeitlichen Vorschub von Diagrammscheiben eine noch akzeptierbare Auflösung insbesondere im Falle von Unfallauswertungen ermöglichen. Das heißt, für die Geschwindigkeitsaufzeichnungen ist es unverzichtbar, daß das Registrierorgan kontinuierlich auf der Diagrammscheibe aufliegt.

Es bestand somit die Aufgabe unter Berücksichtigung der Anforderungen an Qualität und Struktur der für die jeweiligen Daten und Meßwerte vorzunehmenden Aufzeichnungen, die Registrierfunktionen auszuweiten und das Raumproblem mit möglichst geringem Aufwand zu lösen.

Die Lösung der Aufgabe beschreibt der Patentanspruch 1. Vorteilhafte Ausgestaltungen des Lösungsgedankens sind in den Unteransprüchen erläutert.

Die Erfindung löst die gestellte Aufgabe indem sie mit einem besonders geringen Aufwand an Bauteilen und Montagearbeitsgängen eine Registriervorrichtung schafft, in der die beiden unterschiedlichen, einleitend geschilderten Registrierkonzepte auf engstem Raum vereinigt. Vorteilhaft ist dabei insbesondere die Verwendung möglichst gleicher Bauteile sowie die gemeinsame Nutzung von Bauteilen durch beide Registrierkonzepte. Von besonderer Bedeutung ist ferner, daß nur eine Nockenwelle vorgesehen ist und daß mit dieser Nockenwelle sämtliche Funktionen der beiden Registrierkonzepte gesteuert werden. Dabei ist die Nockenwelle in vorteilhafter Weise als gebaute Welle ausgeführt und derart gestaltet, daß das Absenken und Anheben des Mehrspur-Registrierorgans zur Vermeidung von Schleifspuren auf der Diagrammscheibe innerhalb eines relativ kleinen Drehwinkels der Nockenwelle beispielsweise innerhalb von 30° und damit in relativ kurzer Zeit erfolgt.

Im folgenden sei ein Ausführungsbeispiel der erfindungsgemäßen Registriervorrichtung anhand der beigefügten Zeichnungen näher erläutert. Es zeigen:
Fig. 1 einen Ausschnitt einer Diagrammscheibe mit den üblichen Aufzeichnungen eines Fahrtabschnittes zugeordneten, fahrerbezogenen Kennzeichnungen im Maßstab 1 : 1,
Fig. 2 eine Draufsicht der Registriervorrichtung,
Fig. 3 eine vergrößerte Darstellung des Bereichs I in Fig. 2 im Schnitt,
Fig. 4 A, B und C Teilansichten der Registriervorrichtung in Führungsrichtung der Registrierschlitten (Pfeil P) bei unterschiedlichen Funktionszuständen in gegenüber der Fig. 2 vergrößerter Darstellung.

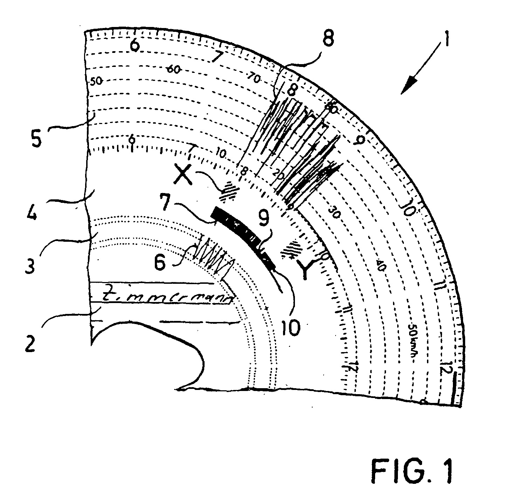

Bei der in Figur 1 dargestellten Diagrammscheibe 1 handelt es sich um eine an sich übliche Ausführung mit einem Innenfeld 2, in welchem persönliche Daten des Fahrers und fahrzeugspezifische Werte einzutragen sind, einem ringförmigen Aufzeichnungsfeld 3 für die Darstellung der zurückgelegten Strecken in Form einer Zickzackkurve, einem weiteren Aufzeichnungsfeld 4, in welchem die Pausen und verschiedene Arten von Arbeitszeiten in Form von Balkendiagrammen sowie Zusatzaufzeichnungen, z. B. Strichmarken für den Kraftstoffverbrauch, aufgezeichnet werden und ein Aufzeichnungsfeld 5, in welchem die Geschwindigkeitsaufzeichnungen erfolgen. Die Figur 1 zeigt ferner die Aufzeichnung einer Fahrt mit einem Wegdiagramm 6, einer Lenkzeitaufzeichnungn 7 sowie einem Geschwindigkeitsdiagramm 8. Bevor die Diagrammscheibe 1 dem betreffenden Fahrtschreiber entnommen worden ist, sind gemäß den Balkendiagrammelementen 9 und 10 nach der Fahrt vom Fahrer unterschiedliche Arbeiten ausgeführt worden. Außerdem läßt sich der Figur 1 entnehmen, daß nach dem Einlegen der Diagrammscheibe 1 in den Fahrtschreiber in dem Aufzeichnungsfeld 4 der Diagrammscheibe 1 eine mit X bezeichnete Kennzeichnung aufgezeichnet worden ist. Diese Kennzeichnung besteht aus einer Fahrernummer und einer beispielsweise dreistelligen Diagrammscheibennummer. Sie wird dann aufgezeichnet, wenn eine Identifikationskarte des Fahrers in einen vorgesehenen Kartenschacht des betreffenden Fahrtschreibers oder eines diesem zugeodneten Zusatzaggregates, und zwar nicht mehr ohne weiteres entnehmbar, eingeführt ist. Mit Y ist eine weitere Kennzeichnung, bestehend aus der Fahrernummer und einer gegenüber der Kennzeichnung X um "1" erhöhten Diagrammscheibennummer bezeichnet. Die Kennzeichnung Y macht deutlich, daß während des Arbeitsintervalls 10 der Fahrtschreiber kurzzeitig geöffnet worden ist, was gegebenenfalls als Unterbrechung des Balkendiagramms 10 nicht ersichtlich ist.

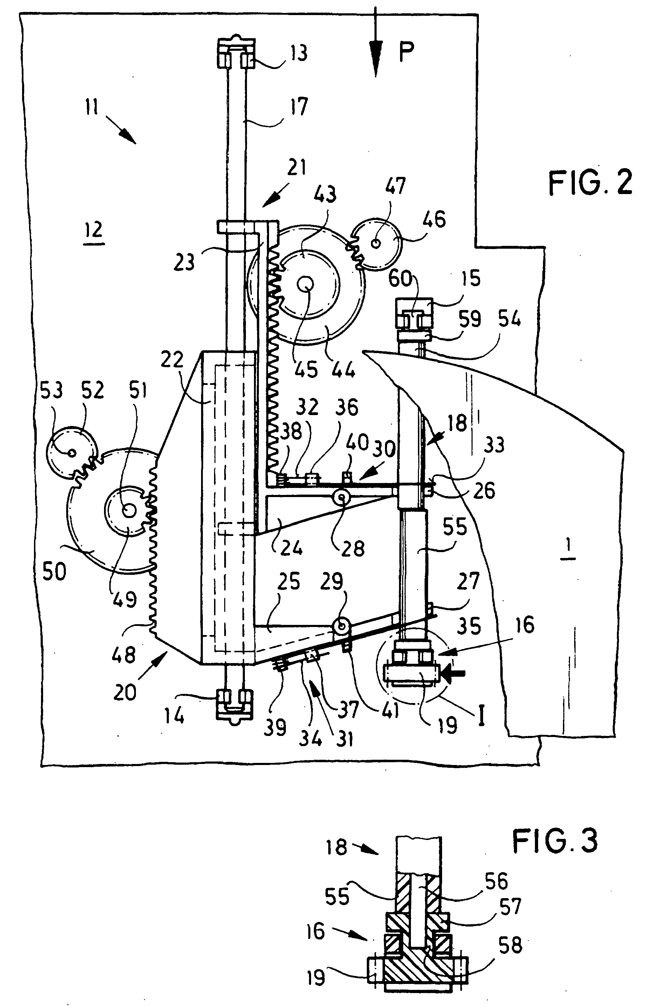

Die Draufsicht, Figur 2, zeigt die erfindun.gsgemäße Registriervorrichtung 11 in Anordnung auf einer Montageplatte 12, welche in den betreffenden Fahrtschreiber einsetzbar ist. Dabei erfolgt der Blick auf die Registriervorrichtung 11 von der in Figur 2 teilweise dargestellten Diagrammscheibe 1 bzw. von der Registrierebene aus. Das heißt, die Registriervorrichtung 11 ist derart ausgebildet, daß sie in dem relativ engen Bauraum zwischen der Registrierebene und der Montageplatte 12 Platz findet. Mit 13, 14, 15 und 16 sind an der Montageplatte 12 vorzugsweise spritzgießtechnisch angeformte Halter bezeichnet, an denen als wesentliche Funktionselemente im einzelnen nicht bezeichnete, gegeneinander wirkende federnde Klauen ausgebildet sind. Dabei dient das Halterpaar 13, 14 der Befestigung einer Führungsstange 17, in dem anderen Halterpaar 15, 16 ist eine im folgenden noch näher zu beschreibende Nockenwelle 18 gelagert, welche von einem nicht dargestellten Stellmotor über eine geeignete getriebliche Verbindung, von der in Figur 2 lediglich ein Zahnrad 19, vorzugsweise ein Schraubenrad und ein Kraftflußpfeil dargestellt sind, angetrieben wird. Ferner geht aus der Figur 2 hervor, daß auf der Führungsstange 17, die durch geeignete an den Haltern 13 und 14 angeformte Wände auch in axialer Richtung gesichert ist, zwei Registrierschlitten 20 und 21 verschiebbar gelagert sind. Dabei sind die als Spritzgußteile hergestellte Registrierschlitten 20 und 21 derart ausgebildet, daß die jeweiligen Lagerstellen auf der Führungsstange 17 zur Verkleinerung der Kippwinkel einen möglichst großen Abstand voneinander haben, was bei nur zwei Registrierschlitten 20 und 21 wesentlich leichter zu realisieren ist als bei den bei herkömmlichen Fahrtschreibern üblichen drei und mehr Registrierschlitten. Diesem Zweck dient auch ein gegenseitiges Umgreifen einer Lagerstelle eines Registrierschlittens 20 bzw. 21 durch die Lagerbrücke 22 bzw. 23 des jeweiligen anderen Registrierschlittens 20 bzw. 21. An den Registrierschlitten 20, 21 ist jeweils ein Arm 24 bzw. 25 angeformt, der.mit einem Finger 26 bzw. 27 in den Bewegungsbereich der Nockenwelle 18 eingreift. Die eigentlichen Registrierorgane 28, 29 sind als Stifte ausgebildet und mit den Armen 24, 25 durch Einpressen fest verbunden. Dabei handelt es sich bei dem Registrierorgan 28 um das im Aufzeichnungsfeld 5 registrierende Geschwindigkeits-Registrierorgan, während das Registrierorgan 29 als Mehrspur-Registrierorgan dient. Außerdem sind an den Armen 24, 25 die Registrierkraft liefernde Schenkelfedern 30 und 31 gehaltert, deren einer Schenkel 33 bzw. 35 sich auf der Nockenwelle 18 abstützt, während der jeweils andere Schenkel 32 bzw. 3.4 an jeweils einer an dem betreffenden Arm 24 bzw. 25 angeformten Stütze 36 bzw. 37 anliegt. Der Zentrierung der Schenkelfedern 30, 31 dienen Zapfen 38 und 39; mit 40 und 41 sind an den Armen 24, 25 angeformte Haken bezeichnet, die der seitlichen Fixierung der Schenkel 32 und 34 dienen.

Wie aus der Figur 2 außerdem hervorgeht, steht der Registrierschlitten 21 über eine an ihm ausgebildete Verzahnung 42 in Eingriff mit einem Zahnradpaar 43/44, das auf einer in der Montageplatte 12 befestigten Achse 45 gelagert ist und mit einem Ritzel 46 kämmt. Das Ritzel 46 ist auf einer durch die Montageplatte 12 hindurchgreifenden Welle 47 eines auf der Gegenseite der Montageplatte 12 angeordneten und geschwindigkeitsabhängig angesteuerten Schrittmotors befestigt. In ähnlicher Weise steht der Registrierschlitten 22 über eine an ihm ausgebildete Verzahnung 48 und einen Getriebezug 49, 50, 51, 52, 53 mit einem auf der Gegenseite der Montageplatte 12 angeordneten Schrittmotor in Wirkverbindung. Dieser wird derart angesteuert, daß der Registrierschlitten 22 und damit das Registrierorgan 29 meßwertunabhängig über den Aufzeichnungsfeldern 3 und 4 der Diagrammscheibe 1 hin- und herbewegt wird.

Die Figur 2 zeigt ferner, daß die Nockenwelle 18 in axialer Richtung zwei den Registrierschlitten 21 und 22 zugeordnete Nocken 54 und 55 aufweist, die in Drehrichtung der Nockenwelle 18 gegeneinander versetzt sind. Zweckmäßigerweise ist die Nockenwelle 18 unter Verwendung von zwei Einzelnocken 54 und 55 als eine zusammengebaute Welle ausgebildet. Dabei ist es selbstverständlich, daß um Verschleiß insbesondere aufgrund der schleifenden Federschenkel 33, 35 zu vermeiden und die Antriebsenergie zu minimieren, die Nocken 54, 55 mit einer hohen Oberflächengüte gefertigt sein müssen. Den Kern der Nockenwelle 18 bildet eine Vierkantwelle 56. Diese ist einerseits in dem Zahnrad 19, an dem ein mit einem Flansch 57 versehener Ansatz 58 angeformt ist, andererseits in einer mit einem Bund 59 versehenen Buchse 60 gehaltert. Wie die Figur 3 zeigt sind hierzu in der Buchse 60 und in dem Zahnrad 19 dem Querschnitt der Vierkantwelle 56 entsprechende Sacköffnungen ausgeformt. Die aus der Vierkantwelle 56, dem Zahnrad 19, den Nocken 54 und 55 und der Buchse 60 zusammengesteckte Nockenwelle 18 ist zwischen die Klauen der Halter 15 und 16 einrastbar und ohne weitere beispielsweise axial sichernde Bauelemente lauffähig.

Besonders erwähnt sei, daß die Nocken 54, 55 gleichgestaltet sind. Der bereits erwähnte gegenseitige winkelmäßige Versatz der Nocken 54, 55, der kleiner ist als 90°, wird dadurch erzielt, daß die in den Nocken 54, 55 ausgebildeten Vierkantöffnungen in bezug auf eine Symmetrielinie, die für gegenüberliegende zentrische Bereiche der Nocken 54, 55 definierbar ist, asymmetrisch angebracht sind und daß beim Zusammenbau der Nockenwelle 18 die Nocken 54, 55 seitenverkehrt auf die Vierkantwelle 56 aufgesteckt werden.

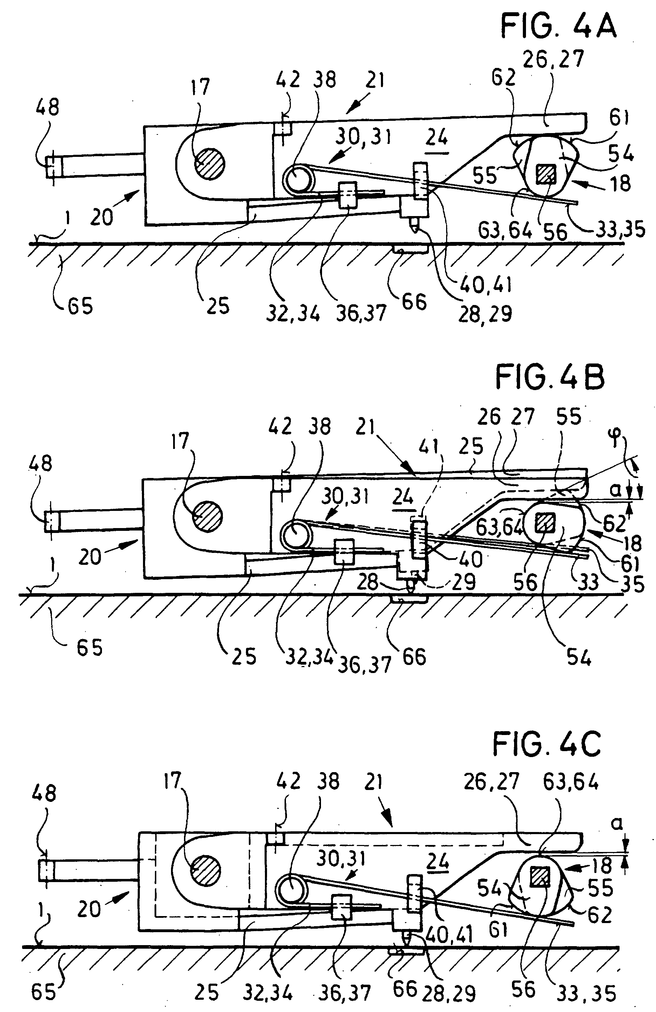

Im folgenden sei die Funktion der Registriervorrichtung 11 anhand der Figuren 4 A, B und C näher erläutert.

Die Figur 4 A zeigt einen Funktionszustand, bei dem beide, das Geschwindigkeits-Registrierorgan 28 und das Mehrspur-Registrierorgan 29 von der Aufzeichnungsebene abgehoben sind und eine Entnahme und/oder Eingabe einer Diagrammscheibe 1 erfolgen kann. Dabei liegen die Registrierschlitten 20 und 21 mittels der an den Armen 24, 25 angeformten Finger 26, 27 in jeweils einem zentrischen Bereich 61 bzw. 62 der Nocken 54 und 55 unter einer gewissen durch die Schenkelfedern 30 und 31 erzeugten Vorspannung auf der Nockenwelle 18 auf, während sich die Schenkel 33 und 35 der Schenkelfedern 30 und 31 an den zentrischen Bereichen 61, 62 gegenüberliegenden, ebenfalls. zentrischen Bereichen 63 und 64 der Nocken 54 und 55 abstützen. Die Form der Nocken 54, 55 ist im wesentlichen dadurch bestimmt, daß die verbindenden nicht näher bezeichneten Flächen zwischen den zentrischen Bereichen 61, 62 mit größerem Radius und den zentrischen Bereichen 63, 64 mit kleinerem Radius tangential an den Bereichen 63, 64 mit kleinerem Radius angeformt sind.

Die Figur 4 B zeigt einen Funktionszustand nach dem Verschwenken der Nockenwelle 18 um 90° in Uhrzeigerrichtung. In diesem Funktionszustand ist das Geschwindigkeits-Registrierorgan 28 auf die Diagrammscheibe 1 abgesenkt und befindet sich in Registrierbereitschaft. Das heißt, der Registrierschlitten 21 liegt nicht mehr auf dem Nocken 54 auf, sondern er stützt sich unter der Wirkung des Schenkels 33 der Schenkelfeder 30 mittels des Geschwindigkeits-Registrierorgans 28 auf der Diagrammscheibe 1 ab. Mit "a" ist das Maß bezeichnet, um das der Finger 26 von dem Nocken 54 abgehoben ist; 65 und 66 stellen eine in dem betreffenden Fahrtschreiber vorgesehene Registrierauflage und eine in der Registrierauflage 65 ausgebildete Freisparung dar.

Bei der Schwenkbewegung der Nockenwelle 18 wird die Schenkelfeder 30 über deren Schenkel 33 zusätzlich gespannt und so die erforderliche Registrierkraft erzeugt. In dieser Stellung der Nockenwelle 18 liegt der Registrierschlitten 20 unter der Wirkung des Schenkels 35 der Schenkelfeder 31 auf dem Nocken 55 auf, das Mehrspur-Registrierorgan 29 ist also von der Diagrammscheibe 1 abgehoben. In der Position der Figur 4 B ist aber ersichtlich, daß die Gestaltung des Nockens 55 ein Absenken des Mehrspur-Registrierorgans 29 auf die Diagrammscheibe 1 innerhalb eines relativ kleinen zusätzlichen Schwenkwinkels ϕ der Nockenwelle 18 gestattet und somit das beim Aufzeichnen in mehreren Spuren erforderliche extrem kurzzeitige Anheben und Absenken des betreffenden Registrierschlittens 20 ermöglicht.

Die Funktionsdarstellung gemäß der Figur 4 C zeigt die Nockenwelle 18 gegenüber der Funktionsstellung in Figur 4 B um weitere 90° in Uhrzeigerrichtung verschwenkt. In dieser Funktionsstellung sind beide Registrierorgane 28 und 29 auf die Diagrammscheibe 1 abgesenkt und die Schenkel der Schenkelfedern 30 und 31 stützen sich an den zentrischen Bereichen 61 und 62 der Nocken 54 und 55 ab. Auf der anderen Seite besteht zwischen den Figuren 26 und 27 und den zentrischen Bereichen 63 und 64 der Nocken 54 und 55 keine Wirkverbindung.

Der Vollständigkeit halber sei noch erwähnt, daß die während des Absenkens und Anhebens des das Mehrspur-Registrierorgan 29 tragenden Armes 25 des Registrierschlittens 20 sich ergebenden Schwankungen der Registrierkraft des Geschwindigkeits-Registrierorgans 28 durch die Verwendung von Schenkelfedern vernachlässigbar ist, da Schenkelfedern der verwendeten Art die Eingenschaft haben innerhalb großer beispielsweise auch Fertigungs- und Montagetoleranzen eine gleichmäßige Registrierkraft zu liefern. Andererseits können diese Schwankungen ohne weiteres durch entsprechende Vorspannung außerhalb eines kritischen Bereichs gelegt oder durch eine geeignete Gestaltung des Nockens 54 beseitigt werden, allerdings mit dem Aufwand einer speziellen, weil nicht mehr symmetrischen, Ausführungsform. Der das Mehrspur-Registrierorgan 29 tragende Registrierschlitten 20 wird aus diesem Grunde vorzugsweise im Start-Stopp-Betrieb angesteuert, so daß während des Registrierens keine Änderung der Registrierkraft erfolgt.

## Patentansprüche

1. Registriervorrichtung für Fahrtschreiber mit als Aufzeichnungsträger dienenden, von einem Laufwerk uhrzeitrichtig angetriebenen Diagrammscheiben, auf welchen wenigstens Fahrdaten, wie Strecken und Geschwindigkeiten sowie Arbeitszeitdaten, wie Lenkzeiten und Ruhezeiten aufgezeichnet werden und mit quer zur Transportrichtung der Diagrammscheiben verschiebbar sowie quer zur Verschieberichtung schwenkbar gelagerten Registrierschlitten, welche jeweils ein Registrierorgan tragen und zum Verschwenken in den Bewegungsbereich einer von einem Stellmotor angetriebenen Nockenwelle eingreifen,
**dadurch gekennzeichnet,**
**dass** außer dem geschwindigkeitsabhängig angetriebenen Registrierschlitten (21) lediglich ein weiterer Registrierschlitten (20) vorgesehen ist, welcher in an sich bekannter Weise meßwertunabhängig angetrieben ist derart, dass das auf diesem Registrierschlitten (20) angeordnete Mehrspur-Registrierorgan (29) innerhalb eines in bezug auf eine eingelegte Diagrammscheibe (1) mehrere konzentrische Aufzeichnungsfelder (3, 4) überdeckenden radialen Bereichs hin- und herbewegt wird und welcher beim Anliegen eines Meßwertes, eines Zeitsignals oder eines Kennzeichnungsbefehls kurzzeitig verschwenkt und damit das Mehrspur-Registrierorgan (29) für die Dauer des Aufzeichnens eines Diagramm- oder Kennzeichenelementes in dem dem Meßwert, dem Zeitsignal oder dem Kennzeichen zugeordneten Aufzeichnungsfeld auf die eingelegte Diagrammscheibe (1) abgesenkt wird,
**dass** beiden Registrierschlitten (20) und (21) eine Nockenwelle (18) zugeordnet ist und dass die Nockenwelle (18) derart ausgebildet ist, dass bei einem ersten Drehwinkel das Geschwindigkeits-Registrierorgan (28) aus einer Stellung, in der beide Registrierorgane (28, 29) zum Zwecke einer Eingabe oder Entnahme einer Diagrammscheibe (1) angehoben sind, auf die Diagrammscheibe (1) abgesenkt wird und dass innerhalb eines folgenden Drehwinkels (ϕ) der Nockenwelle (18) das Geschwindigkeits-Registrierorgan (28) kontinuierlich mit der Diagrammscheibe (1) in Wirkverbindung steht und das Mehrspur-Registrierorgan (29) spurabhängig gesteuert absenkt und durch Drehrichtungsumkehr anhebbar ist.

2. Registriervorrichtung nach Anspruch 1,
**dadurch gekennzeichnet,**
**dass** der das Geschwindigkeits-Registrierorgan (28) tragende Registrierschlitten (21) und der das Mehrspur-Registrierorgan (29) tragende Registrierschlitten (20) auf einer Führungsstange (17) gelagert sind.

3. Registriervorrichtung nach Anspruch 1,
**dadurch gekennzeichnet,**
**dass** an den Registrierschlitten (20, 21) Arme (24, 25) angeformt sind, die sowohl die Registrierorgane (28, 29) tragen als auch in den Bewegungsbereich der Nockenwelle (18) eingreifen.

4. Registriervorrichtung nach Anspruch 1,
**dadurch gekennzeichnet,**
**dass** die Nockenwelle (18) als eine gebaute Welle ausgebildet ist bestehend aus einer Vierkantwelle (56), den Registrierschlitten (20) und (21) zugeordneten Nocken (54) und (55), einer der Lagerung dienenden Buchse (60) und einem mit einem Lageransatz (58) versehenen Zahnrad (19).

5. Registriervorrichtung nach Anspruch 4,
**dadurch gekennzeichnet,**
**dass** das Profil der Nocken (54) und (55) gleichgestaltet ist
und
**dass** die jeweils in den Nocken (54) und (55) vorgesehene Vierkantöffnung zur Aufnahme der Vierkantwelle (56) zu einer Symmetrielinie bezüglich der an den Nocken (54) und (55) angeformten zentrischen Bereiche größeren und kleineren Radius (61, 62) und (63, 64) asymmetrisch ausgebildet ist.

## Claims

1. Recording device for a tachograph having diagram discs which serves recording carriers and are driven in the clockwise direction by a drive mechanism and on which at least travel data, such as distances and speeds and working time data such as driving times and rest stops are recorded, and having recording carriages which are mounted so as to be displaceable transversely with respect to the direction in which the diagram discs are conveyed and pivotable transversely with respect to the displacement direction, said recording carriages each bearing a recording element and, for pivoting, engage in the movement region of a camshaft driven by an actuator motor, **characterized in that**, apart from the recording carriage (21) which is driven as a function of the speed, only one further recording carriage (20) is provided which is driven independently of the measured value in a manner known per se such that the multi-track recording element (29), arranged on this recording carriage (20), is moved to and fro within a radial range which covers a plurality of concentric recording fields (3, 4) with respect to an inserted diagram disc (1), and which briefly pivots when a measured value, a time signal or an identification instruction is applied, and the multi-track recording element (29) is thus lowered onto the inserted diagram disc (1) for the duration of the recording of a diagram element or identification element in the recording field assigned to the measured value, the time signal or the identifier,
**in that** the two recording carriages (20) and (21) are assigned a camshaft (18), and
**in that** the camshaft (18) which is embodied in such a way that in a first rotational angle the speed-recording element (28) is lowered, out of a position in which both recording elements (28, 29) are raised for the purpose of inserting or removing a diagram disc (1), onto the diagram disc (1), and **in that** within a following rotational angle (Ψ) of the camshaft (18) the speed-recording (28) is continuously operatively connected to the diagram disc (1), and the multi-track recording element (29) is lowered controlled as a function of the track and can be raised by reversing the direction of rotation.

2. Recording device according to Claim 1, **characterized in that** the recording carriage (21) which bears the speed-recording element (28), and the recording carriage (20) which bears the multi-track recording element (29) are mounted on a guide rod (17).

3. Recording device according to Claim 1, **characterized in that** the arms (24, 25), which bear both the recording elements (28, 29) and engage in the movement region of the camshaft (18), are formed on the recording carriages (20, 21).

4. Recording device according to Claim 1, **characterized in that** the camshaft (18) is embodied as a worked shaft, composed of a square shaft (56), cams (54) and (55) assigned to the recording carriages (20) and (21), a bushing (60) serving for bearing purposes and a gearwheel (19) provided with a bearing attachment (58).

5. Recording device according to Claim 4, **characterized in that** the section of the cams (54) and (55) are identical, and **in that** the square opening provided respectively in the cams (54) and (55) for receiving the square shaft (56) are of asymmetrical design with respect to a line of symmetry relating to the central regions of greater and smaller radius (61, 62) and (63, 64) formed onto the cams (54) and (55).

## Revendications

1. Dispositif d'enregistrement pour enregistreurs de route avec des disques de diagramme servant de supports d'enregistrement entraînés par un mécanisme en fonction du temps réel, sur lesquels seront enregistrées au moins des données de la course telles que distances et vitesses ainsi que des données de temps de travail tels que temps de conduite et temps de repos et avec des chariots d'enregistrement, déplaçables transversalement au sens de transport des disques de diagramme ainsi que transversalement au sens de déplacement, qui portent respectivement un organe enregistreur et s'engagent pour le pivotement dans la zone de mouvement d'un arbre à cames entraîné par un moteur pas à pas,
**caractérisé par le fait**
**que**, en plus du chariot d'enregistrement entraîné en fonction de la vitesse (21) est seulement prévu un autre chariot d'enregistrement (20) qui est entraîné, d'une manière en soi connue, indépendamment des paramètres de mesure de telle sorte que l'organe enregistreur multipiste (29) disposé sur ledit chariot d'enregistrement (20) sera déplacé selon un mouvement de va et vient dans les limites d'une zone radiale recouvrant, par rapport à un disque de diagramme (1) mis en place, plusieurs champs d'enregistrement concentriques (3, 4) et qui, lors de l'application d'une valeur de mesure, d'un signal de temps ou d'une instruction d'identification, sera brièvement déplacé et que l'organe enregistreur multipiste (29) sera, de ce fait, abaissé pour la durée de l'enregistrement d'un élément de diagramme ou d'identification dans le champ d'enregistrement associé à la valeur de mesure, au signal de temps ou à l'identification sur le disque de diagramme (1) mis en place,
**qu'**aux deux chariots d'enregistrement (20) et (21) est associé un arbre à cames (18) et
**que** ledit arbre à cames (18) est réalisé de telle sorte que, pour un premier angle de rotation, d'une position dans laquelle les deux organes enregistreurs (28, 29) sont soulevés aux fins d'une introduction ou d'un prélèvement d'un disque de diagramme (1), l'organe enregistreur des vitesses (28) sera abaissé sur ledit disque de diagramme (1) et que dans l'espace d'un angle de rotation suivant (ϕ) de l'arbre à cames (18), l'organe enregistreur des vitesses (28) coopère fonctionnellement, en continu, avec le disque de diagramme (1) et abaisse l'organe enregistreur multipiste (29) commandé en fonction des pistes et peut être soulevé en cas d'inversion du sens de rotation.

2. Dispositif d'enregistrement selon la revendication 1,
**caractérisé par le fait**
**que** le chariot d'enregistrement (21) portant l'organe enregistreur des vitesses (28) et le chariot d'enregistrement (20) portant l'organe enregistreur multipiste (29) sont montés sur une barre de guidage (17).

3. Dispositif d'enregistrement selon la revendication 1,
**caractérisé par le fait**
**que** sur les chariots d'enregistrement (20, 21) sont moulés des bras (24, 25) qui portent, d'une part, les organes enregistreurs (28, 29) et s'engagent, d'autre part, dans la zone de mouvement de l'arbre à cames (18).

4. Dispositif d'enregistrement selon la revendication 1,
**caractérisé par le fait**
**que** l'arbre à cames (18) est réalisé comme un arbre construit constitué d'un arbre carré (56), des cames (54) et (55) associés aux chariots d'enregistrement (20) et (21), d'une douille (60) servant au montage et d'une roue dentée (19) pourvu d'un collet de palier (58).

5. Dispositif d'enregistrement selon la revendication 4,
**caractérisé par le fait**
**que** le profil des cames (54) et (55) est de configuration identique et
**que** l'ouverture carrée respectivement prévue dans les cames (54) et (55) pour loger l'arbre carré (56) est de réalisation asymétrique par rapport à une ligne de symétrie concernant les zones centrées d'un rayon plus grand et d'un rayon plus petit (61, 62) et (63, 64) moulées sur les cames (54) et (55).
